Europäisches Patentamt

European Patent Office

Office européen des brevets

(19)

(11) Veröffentlichungsnummer : **0 417 061 B1**

# (12) EUROPÄISCHE PATENTSCHRIFT

(45) Veröffentlichungstag der Patentschrift :
**02.03.94 Patentblatt 94/09**

(51) Int. Cl.$^5$ : **G01M 3/18,** F17D 5/06

(21) Anmeldenummer : **90890226.5**

(22) Anmeldetag : **26.07.90**

(54) **Verfahren und Vorrichtung zur Ortung des wahren Ortes einer Leckstelle in einer ein feuchtes Medium führenden Rohrleitung.**

Die Akte enthält technische Angaben, die nach dem Eingang der Anmeldung eingereicht wurden und die nicht in dieser Patentschrift enthalten sind.

(30) Priorität : **05.09.89 AT 2078/89**

(43) Veröffentlichungstag der Anmeldung :
**13.03.91 Patentblatt 91/11**

(45) Bekanntmachung des Hinweises auf die Patenterteilung :
**02.03.94 Patentblatt 94/09**

(84) Benannte Vertragsstaaten :
**AT BE CH DE FR GB LI**

(56) Entgegenhaltungen :
**WO-A-88/08967**
**DE-A- 2 337 983**

(73) Patentinhaber : **Brandes, Bernd**
**Mühlengrund 4**
**D-24329 Grebin (DE)**

(72) Erfinder : **Scheuermann, Herbert, Dipl.-Ing.**
**Reimersgasse 16/E4**
**A-1190 Wien (AT)**

(74) Vertreter : **Einsel, Martin et al**
**Patentanwälte Dipl.-Phys. M. Einsel**
**Jasperallee 1a**
**D-38102 Braunschweig (DE)**

EP 0 417 061 B1

**Beschreibung**

Die Erfindung bezieht sich auf ein Verfahren zur Ortung des wahren Ortes einer Leckstelle in einer ein feuchtes Medium führenden Rohrleitung, unter Verwendung zumindest einer entlang der Rohrleitung verlegten, elektrisch leitenden, vorzugsweise von einem Draht gebildeten, Fühlerleitung, an die eine elektrische Speisequelle anschaltbar ist, wobei von der Fühlerleitung zumindest eine elektrische Meßgröße, insbesondere eine an der Fühlerleitung eine erste elektrische Meßgröße für den Gesamtableitwiderstand RL zwischen der Fühlerleitung und der Rohrleitung und eine zweite Meßgröße für den Leckort 1 ermittelt werden.

Weiters bezieht sich die Erfindung auf eine Vorrichtung zur Durchführung eines solchen Verfahrens.

Ein Verfahren der eingangs geschilderten Art ist aus der AT-PS 388 430 bekannt. Das dort beschriebene Verfahren liefert zuverlässige Ergebnisse, jedoch nur dann, wenn die Leckstelle den einzigen Ableitwiderstand zwischen Rohrleitung und Fühlerleitung bildet. In der Praxis hat es sich jedoch gezeigt, daß häufig zusätzliche Ableitwiderstände vorhanden sind, z.B. auf noch nicht ganz ausgetrocknete frühere Leckstellen zurückzuführende Einfeuchtungen oder Wassereinbrüche von außen, unzureichend isolierte Kupferrückleitungen zwischen der Fühlerleitung und der Meßvorrichtung usw. In solchen Fällen ergibt das bekannte Verfahren eine gegenüber dem wahren Ort verschobene Ortung des Leckortes, wobei Richtung und Stärke dieser Verschiebung von Wert und vom Ort der zusätzlichen Ableitwiderstände abhängen. Da es in der Regel nicht bekannt ist, ob solche zusätzliche Ableitwiderstände vorliegen oder nicht, ist somit jede Messung mit dem bekannten Verfahren, ebenso wie mit allen anderen bekannten Verfahren zur Ortung solcher Leckstellen, mit einem gewissen Unsicherheitsfaktor behaftet.

Die Erfindung setzt sich zur Aufgabe, ein Verfahren der eingangs geschilderten Art so zu verbessern, daß es von den zuvor erwähnten zusätzlichen Ableitwiderständen unabhängig wird und somit in allen Fällen eine verläßliche Ortung des wahren Ortes der Leckstelle ergibt. Die Erfindung löst diese Aufgabe durch ein Verfahren nach dem Anspruch 1. Die Erfindung geht hierbei von der Erkenntnis aus, daß eine neu hinzukommende wahre Leckstelle vom ersten Auftreten an ständig niederohmiger wird, bis sich je nach der ausgetretenen Flüssigkeitsmenge nach einiger Zeit ein stationärer Widerstandswert ergibt, wogegen alle zusätzlichen Ableitwiderstände während des betreffenden Zeitabschnittes zumindest im wesentlichen konstant bleiben. Dies bedeutet, daß in einem kartesischen Koordinatensystem Punkte mit den Koordinaten $R_L$ (d.i. der von der Parallelschaltung aller Ableitwiderstände gebildete Gesamtableitwiderstand) und l (d.i. der dem jeweils gemessenen Gesamtableitwiderstand $R_L$ entsprechende Leckort) zumindest näherungsweise auf einer Geraden liegen, wobei sich die mit fortschreitender Zeitdauer gemessenen Punkte mit der Zeit der Achse für l nähern, weil der wahre Leckwiderstand mit der Zeit immer niederohmiger wird und daher auch der Gesamtableitwiderstand $R_L$ immer niederohmiger wird. Diese Gerade läßt sich bis $R_L = 0$ extrapolieren. Dieser theoretisch extrapolierte Wert $R_L = 0$ bedeutet, daß der Widerstand der wahren Leckstelle praktisch Null geworden ist, womit der verfälschende Einfluß aller zusätzlichen Ableitwiderstände eliminiert ist, solange diese nicht auch zu Null geworden sind. Zu dem theoretisch extrapolierten Wert $R_L = 0$ gehört nun der wahre Leckort $l_o$.

In der Praxis bedingen unvermeidliche Meßungenauigkeiten eine gewisse Streuung der im Koordinatensystem eingetragenen Punkte, so daß es häufig zweckmäßig ist, aus den Punkten mehr als eine einzige Gerade zu bilden und die Schnittpunkte dieser Geraden mit der l-Achse zu mitteln. Geeignete Verfahren hiefür werden später beschrieben.

Wie bereits erwähnt, ist für das erfindungsgemäße Verfahren Voraussetzung, daß sich innerhalb der Zeitspanne, in welcher die Messungen erfolgen, die zusätzlichen Ableitwiderstände nicht wesentlich ändern. Um solche Änderungen auszuschließen, wird gemäß einer bevorzugten Variante der Erfindung so vorgegangen, daß beim gesamten Meßverfahren die verschiedenen Zeitpunkte in einem Intervall von wenigen Minuten liegen, was auch den Vorteil hat, daß die gesamte Meßdauer auf eine tragbar kurze Zeit beschränkt bleibt.

Geht man von der Annahme aus, daß die gewonnenen Punkte im Koordinatensystem hinreichend genau auf einer Geraden liegen, dann läßt sich im Rahmen der Erfindung der Schnittpunkt $l_o$ dieser Geraden mit der Achse für l nach der Formel $l_o = l_2 - KR_{L2}$ ermitteln, wobei $K = \frac{l_1 - l_2}{R_{L1} - R_{L2}}$

Wenn jedoch eine gewisse Streuung der Punkte im Koordinatensystem vorliegt oder von vorne herein berücksichtigt werden soll, dann kann im Rahmen der Erfindung so vorgegangen werden, daß im Koordinatensystem jeder der mehr als zwei Punkte mit jedem durch eine Gerade verbunden wird, wobei jede dieser Geraden mit der Achse für l zum Schnitt gebracht wird, daß um jeden der so gewonnenen Schnittpunkte ein vorbestimmtes Intervall auf der Achse für l aufgetragen wird, worauf als $l_o$ jener Schnittpunkt bestimmt wird, in dessen Intervall die meisten Schnittpunkte fallen. Dies ergibt eine statistische Mittelung, die sich in der Praxis bewährt hat. Es können jedoch im Rahmen der Erfindung auch Gauß'sche Näherungsmethoden angewendet werden. Hiezu können erfindungsgemäß im Koordinatensystem aus mehreren Punkten zwei Regressionsgerade nach der Gauß'schen Methode der kleinsten Quadrate gebildet werden, wobei als $l_o$ der arithmetische

Mittelwert der Schnittpunkte dieser beiden Geraden mit der Achse für I ermittelt wird. Eine andere Methode besteht im Rahmen der Erfindung darin, daß im Koordinatensystem aus mehreren Punkten eine Gauß'sche Ausgleichsgerade nach der Methode der kleinsten Fehlerquadrate gebildet wird, wobei als $I_o$ der Schnittpunkt dieser Geraden mit der Achse für I ermittelt wird.

Alle diese Mittelungsverfahren ergeben in der Praxis brauchbare und hinreichend genaue Werte $I_o$ für den wahren Ort der Leckstelle.

Die erfindungsgemäße Vorrichtung ist dem Anspruch 7 zu entnehmen. Das dem Rechner eingegebene Programm berücksichtigt die oben angeführten Verfahrensgänge bzw. Mittelungsmethoden. Gemäß einer bevorzugten Variante der Erfindung weist hiebei die Meßeinrichtung einen Umschalter zur Umpolung eines über einen Teil der Fühlerleitung geführten Konstantstromes oder eine Konstantstromquelle variabler Stromstärke auf, was den Vorteil hat, daß mit einer solchen Meßvorrichtung die Einflüsse der elektrochemischen Störspannungen ausgeschaltet werden können, im letzteren Falle auch die im Meßkreis vorhandenen Nichtlinearitäten.

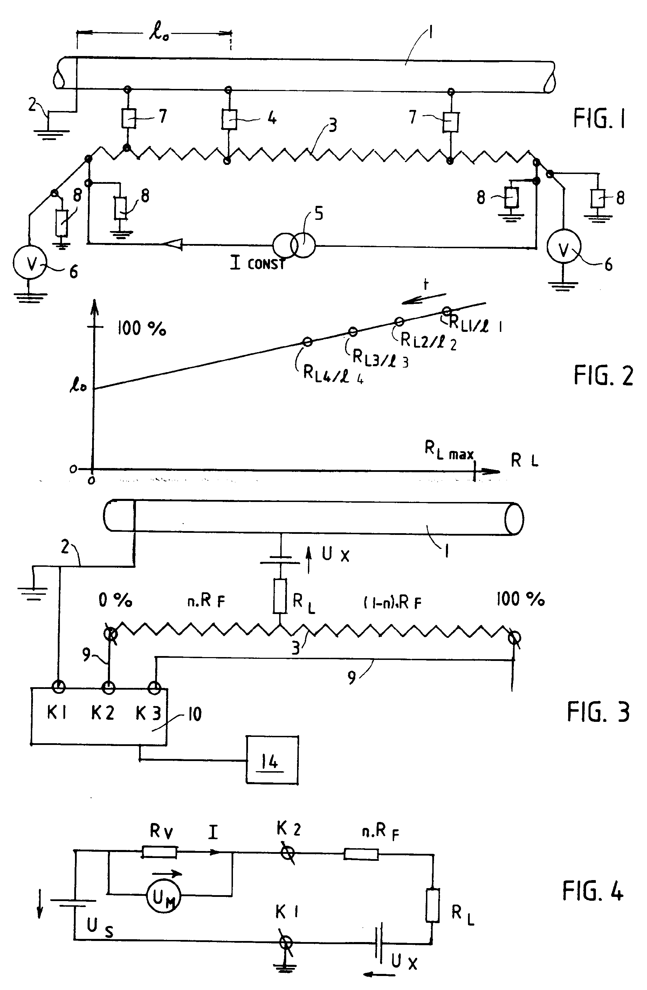

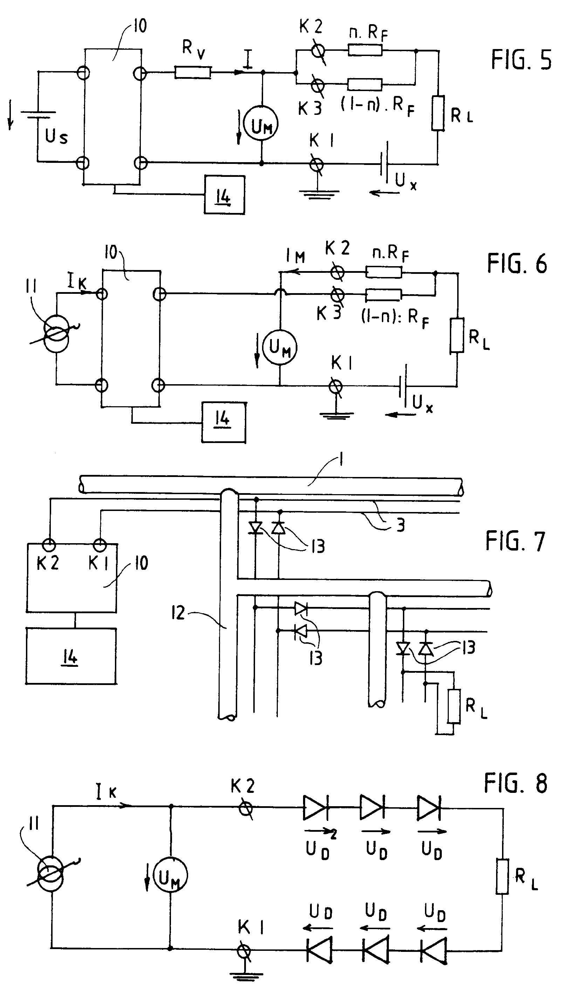

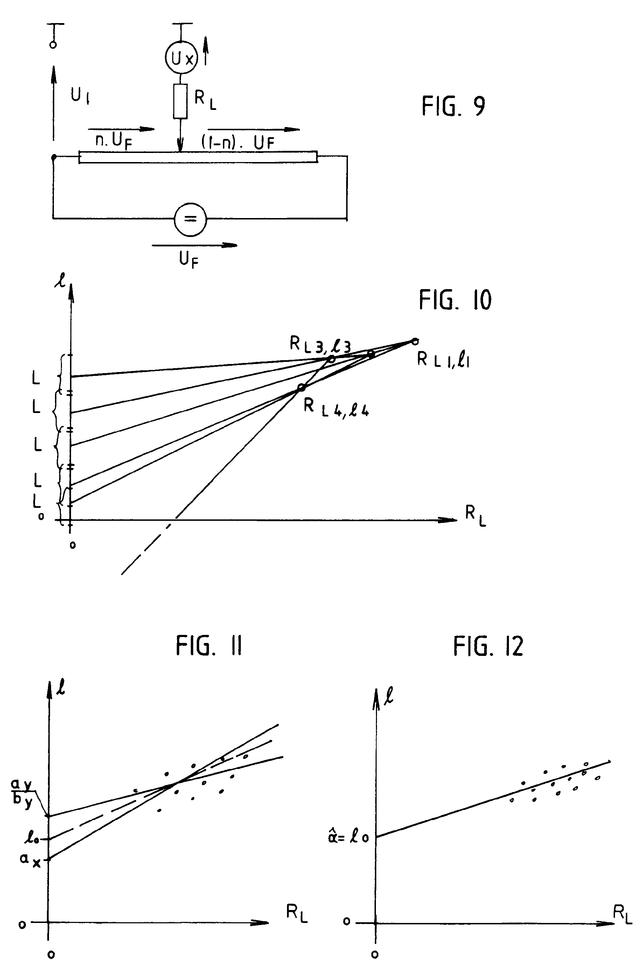

In der Zeichnung ist die Erfindung an Hand von Ausführungsbeispielen schematisch veranschaulicht. Fig.1 zeigt das Prinzipschaltbild der Meßvorrichtung mit den zusätzlichen Ableitwiderständen. Fig.2 zeigt in Form eines Diagrammes die Ergebnisse des Meßverlaufes. Fig.3 zeigt eine geeignete Meßvorrichtung im Schaltbild und Fig.4 im Ersatzschaltbild. Die Fig.5 und 6 zeigen Varianten zu Fig.4. Fig.7 zeigt das Schaltbild einer Meßvorrichtung für eine Rohrleitung mit Verzweigungen, wobei Fig.8 das zugehörige Ersatzschaltbild darstellt. Fig.9 zeigt ein Ersatzschaltbild für die Messung des Leckortes. Die Fig.10,11 und 12 zeigen in Diagrammform drei verschiedene Varianten für die Mittelung der gewonnenen Ergebnisse.

Zu messen ist der genaue Ort $I_o$ (Fig.1) eines Lecks in einer Rohrleitung 1 aus elektrisch leitendem Material, die somit auf Erdpotential 2 liegt. Parallel zur Rohrleitung 1 liegt eine von einem Draht gebildete Fühlerleitung 3. An der Leckstelle $I_o$ bildet sich durch die aus der Rohrleitung 1 austretende Flüssigkeit eine örtlich begrenzte elektrisch leitfähige Verbindung zwischen der Rohrleitung 1 und der Fühlerleitung 3, die durch einen Leckwiderstand 4 symbolisiert werden kann. Da in der Regel mit fortschreitender Zeitdauer immer mehr Flüssigkeit aus der Rohrleitung 1 austritt, wird dieser Leckwiderstand 4 mit fortschreitender Zeitdauer immer niederohmiger. An die beiden Enden der Fühlerleitung 3 ist eine Konstantstromquelle 5 angeschlossen, die einen Strom $I_{const}$ durch die Fühlerleitung 3 schickt und derart an dieser einen definierten Spannungsabfall erzeugt. Das Auftreten des Lecks an der Stelle $I_o$ bewirkt, daß die Fühlerleitung 3 an dieser Stelle das Potential der Rohrleitung 1, also Erdpotential (0 Volt) annimmt. Die Enden der Fühlerleitung 3 nehmen dann dem Leckort proportionale Spannungen gegen das Rohrpotential an, welche mit Spannungsmeßeinrichtungen 6 mit sehr hohem Eingangswiderstand (in der Regel höher als 1 Gigaohm) gemessen werden können. Das Verhältnis der an den beiden Spannungsmeßeinrichtungen 6 gemessenen Spannungen ergibt ein Maß für die Länge $I_o$, also für den Ort des Lecks, allerdings nur unter den Voraussetzungen, daß einerseits keine elektrochemischen und elektromagnetischen Störspannungen vorhanden sind und anderseits keine zusätzlichen Ableitwiderstände von der Rohrleitung 1 gegeben sind. Dies ist in der Regel jedoch nicht der Fall, denn die erwähnten Störspannungen ergeben sich überall dort, wo sich zwei verschiedene Metalle in einem Elektrolyten befinden. Die Praxis hat auch gezeigt, daß in der Regel sehr wohl Ableitwiderstände 7,8 zusätzlich zum Leckwiderstand 4 vorhanden sind, und zwar sowohl Ableitwiderstände 7 zwischen der Rohrleitung 1 und der Fühlerleitung 3, z.B. als Folge noch nicht gnz ausgetrockneter früherer Lecks oder als Folge von Wassereinbrüchen von außen, als auch zusätzliche Ableitwiderstände 8 zwischen der Fühlerleitung 3 und der Meßvorrichtung bzw. Erdpotential. Das Schaltbild nach Fig.1 zeigt, daß in einem solchen Fall die Spannungsmessung an den Spannungsmeßeinrichtungen 6 nicht mehr den wahren Ort $I_o$ der Leckstelle repräsentiert, sondern daß durch die zusätzlichen Ableitwiderstände 7,8 eine Verschiebung des gemessenen Leckortes eintritt. Richtung und Stärke dieser Verschiebung hängen vom Wert und vom Ort der zusätzlichen Ableitwiderstände 7,8 ab. Jedoch wurde erkannt, daß eine neu hinzukommende wahre Leckstelle (Leckwiderstand 4) vom ersten Auftreten an ständig niederohmiger wird, bis sich je nach der ausgetretenen Flüssigkeitsmenge nach einiger Zeit ein stationärer Widerstandswert ergibt. Hingegen bleiben in diesem Zeitabschnitt, soferne dieser nicht allzulang ist, alle zusätzlichen Ableitwiderstände 7,8 konstant, insbesondere wenn der erwähnte Zeitabschnitt mit wenigen Minuten angenommen wird.

Der Messung zugänglich sind nur zwei Werte, nämlich einerseits der Gesamtableitwiderstand $R_L$, gebildet aus der Parallelschaltung aller Widerstände 4,7,8, und anderseits der mittels der Spannungsmeßeinrichtungen 6 gewonnene verfälschte Leckort I. Es wurde nun erkannt, daß bei Eintragung dieser Werte in ein kartesisches Koordinatensystem (Fig.2) die den gemessenen Werten entsprechenden Punkte - im allgemeinen mit hinreichende Genauigkeit - auf einer Geraden liegen. Die Erklärung dafür ist, daß der wahre Leckwiderstand 4 mit der Zeit t (Fig.2) immer niederohmiger wird, wogegen die zusätzlichen Ableitwiderstände 7,8 während der gesamten Meßzeitdauer zumindest im wesentlichen konstant bleiben. Der Gesamtableitwiderstand $R_L$ wird daher in linearer Funktion von I immer niederohmiger. Die aus den gemessenen Punkten gewonnene Gerade läßt sich bis $R_L = 0$ extrapolieren, unter der Voraussetzung, daß die Koordinantensystemachse für $R_L$ mit dem Wert Null beginnt. Der extrapolierte Wert $R_L = 0$ bedeutet, daß der wahre Leckwiderstand 4 zu Null geworden ist, womit der verfälschende Einfluß aller zusätzlichen Ableitwiderstände 7,8 eliminiert ist, solange diese zusätzlichen Ableitwiderstände nicht auch den Wert Null haben. Zum theoretisch extrapolierten Wert $R_L = 0$ gehört der wahre Leckort $I_o$, der sich aus dem Schnittpunkt der aus den gemessenen Punkten gewonnenen Geraden mit der Koordinatenachse für I ergibt (Fig.2).

Für die Ermittlung von $I_o$ müssen daher nur zumindest zwei zeitlich aufeinanderfolgende Werte von $R_L$ und zumindest zwei denselben Zeitpunkten zugehörigen Werte für I möglichst exakt gemessen werden. Hiefür geeignete Meßverfahren werden im folgenden beschrieben:

Fig.3 zeigt eine Fig.1 entsprechende Meßschaltung in einfachster Darstellung, wobei der Widerstand $R_L$ der Parallelschaltung der zuvor erwähnten Ableitwiderstände 4,7,8 entspricht. Die Fühlerleitung 3 ist an ihren Enden mittels Kupferleitungen 9 mit den Klemmen K2 und K3 einer elektrischen Meßvorrichtung 10 verbunden, deren Klemme K1 auf Erdpotential 2 gelegt ist. Die Fühlerleitung 3 hat den Gesamtwiderstand $R_F$, der sich aus den Teilwiderständen $n . R_F$ (von 0% der Fühlerleitungslänge bis zum Leckort) und $(1 - n) . R_F$ (vom Leckort bis 100% der Fühlerleitungslänge) zusammensetzt, wobei n zwischen 0 und 1 liegt und den Leckort repräsentiert. Weiters tritt an der Leckstelle bei Anwesenheit einer elektrisch leitfähigen Flüssigkeit (Elektrolyt) aufgrund der verschiedenen Materialien von Rohrleitung 1 und Fühlerleitung 3 eine elektrochemische Störspannung $U_x$ in der Größenordnung von 1 Volt auf.

Mit gewissen Fehlern läßt sich $R_L$ mit einer bekannten Meßvorrichtung (z.B. DE-OS 2 337 983) messen, die in Fig.4 näher dargestellt ist. Eine Speisespannung $U_s$ wird über einen Vorwiderstand $R_v$ bekannter Größe zwischen die Klemmen K1 und K2, also zwischen Rohrleitung 1 und den Anfang der Fühlerleitung 3 (Fig.1) gelegt. Die Meßspannung $U_m$ hängt mit $R_L$ wie folgt zusammen:

$$U_M = I . R_v$$

$$I = \frac{U_s - U_x}{R_v + n.R_F + R_L}$$

$$U_M = \frac{R_v (U_s - U_x)}{R_v + n.R_f + R_L} \qquad bzw. \quad (Gl.1)$$

$$R_L = \frac{U_s - U_x - U_M}{U_M} . R_v - n.R_F \quad (Gl.2)$$

(Gl.1) bzw. (Gl.2) zeigen, daß bei bekanntem $U_s$ und bekanntem $R_v$ ein beträchtlicher Meßfehler durch die unbekannten Größen $U_x$ und $n.R_F$ vorliegt. Weiters ist der Zusammenhang zwischen $U_M(9)$ und $R_L$ nicht linear nach der Form $y = k . \frac{a - x}{x}$. Diese Meßschaltung liefert daher nur dann brauchbare Ergebnisse, wenn $U_x$ vernachläßigbar klein ist.

Wesentlich genauere Meßergebnisse liefert eine Meßvorrichtung, deren Meßprinzip in Fig.3 und deren Ersatzschaltbild in Fig.5 dargestellt sind. Eine solche Meßvorrichtung ist aus der AT-PS 388 430 bekannt. Der wesentliche Unterschied gegenüber einer Meßvorrichtung nach Fig.4 besteht darin, daß die Meßvorrichtung 10 nach Fig.5 einen Umpolschalter enthält und daß eine Verbindung zwischen den Klemmen K2 und K3 vorhanden ist, wodurch die unbekannten Widerstände $n.R_F$ und $(1-n).R_F$ einander parallelgeschaltet und damit verkleinert werden. Durch die Umpolung der Speisespannung $U_s$ mittels des Umpolschalters der Meßvorrichtung 10 kann $U_x$ zur Gänze eliminiert werden:

1. Messung: $U_M - U_x = I . (R_s + R_L)$, worin $R_s$ die Parallelschaltung von $n.R_F$ und $(1-n(.R_F$ bedeutet.

$$I = \frac{U_s - U_x}{R_v + R_s + R_L}$$

$$U_{M1} - U_x = (U_s - U_x) \frac{R_s + R_L}{R_v + R_s + R_L} \quad (Gl.3)$$

umpolen von $U_s$ und Invertieren von $U_M$ ergibt bei

2. Messung: $U_{M2} + U_x = - I . (R_s + R_L)$

$$I = - \frac{U_s + U_x}{R_v + R_s + R_L}$$

$$U_{M2} + U_x = (U_s + U_x) \frac{R_s + R_L}{R_v + R_s + R_L} \quad (Gl.4)$$

Addition von (Gl.3) und (Gl.4) und Teilung durch 2 ergibt:

$$\frac{U_{M1} + U_{M2}}{2} = U_M = U_s \frac{R_s + R_L}{R_v + R_s + R_L} \quad (Gl.5)$$

bzw.

$$R_L = \frac{U_M}{U_s - U_M} . R_v - R_s \quad (Gl.6)$$

Eine weitere Steigerung der Genauigkeit kann dadurch erreicht werden, daß der Ausdruck $R_s = \dfrac{n.R_F \cdot (1-n).R_F}{n.R_F + (1-n).R_F}$ durch Messung von $R_F$ und n bestimmt wird und so Gl.5 bzw. Gl.6 keine unbekannten Störgrößen mehr enthält. Der Zusammenhang zwischen $U_M$ und $R_L$ ist nach wie vor nichtlinear nach der Form $y = K.\dfrac{x}{a-x}$.

Um einen direkt proportionalen, linearen und sehr genauen Zusammenhang zwischen $U_M$ und $R_L$ nach der Form y = K.x zu erhalten, wie er in der Praxis bevorzugt wird, ist eine Vorrichtung nach Fig.6 zu wählen. Als Speisequelle dient hiebei eine Konstantstromquelle 11, die einen in Stufen einstellbaren und bekannten Konstantstrom $I_K$ liefert, der über einen Umpolschalter der Meßvorrichtung 10 über einen Teil der Fühlerleitung (($1-n).R_F$) und $R_L$ sowie über die elektrochemische Störspannungsquelle fließt.

1. Messung:

$$U_{M1} - U_x = I_K . R_L \quad (Gl.7)$$

Umpolen von $I_K$ und Invertieren von $U_M$ ergibt bei

2. Messung:

$$U_{M2} + U_x = I_k . R_L \quad (Gl.8)$$

Addition von (Gl.7) und (Gl.8) und Teilung durch 2 ergibt

$$\frac{U_{M1} + U_{M2}}{2} = U_M = I_k . R_L \quad (Gl.9)$$

bzw.

$$R_L = \frac{1}{I_k} . U_M \quad (Gl.10)$$

Eine weitere Steigerung der Genauigkeit kann dadurch erreicht werden, daß der Ausdruck $R_s = \dfrac{n.R_F \cdot (1-n).R_F}{n.R_F + (1-n).R_F}$ durch Messung von $R_F$ und n bestimmt wird und so Gl.5 bzw. Gl.6 keine unbekannten Störgrößen mehr enthält. Der Zusammenhang zwischen $U_M$ und $R_L$ ist nach wie vor nichtlinear nach der Form $y = K.\dfrac{x}{a-x}$.

Um einen direkt proportionalen, linearen und sehr genauen Zusammenhang zwischen $U_M$ und $R_L$ nach der Form y = K.x zu erhalten, wie er in der Praxis bevorzugt wird, ist eine Vorrichtung nach Fig.6 zu wählen. Als Speisequelle dient hiebei eine Konstantstromquelle 11, die einen in Stufen einstellbaren und bekannten Konstantstrom $I_K$ liefert, der über einen Umpolschalter der Meßvorrichtung 10 über einen Teil der Fühlerleitung (($1-n).R_F$) und $R_L$ sowie über die elektrochemische Störspannungsquelle fließt.

1. Messung:

$$U_{M1} - U_x = I_K . R_L \quad (Gl.7)$$

Umpolen von $I_K$ und Invertieren von $U_M$ ergibt bei

2. Messung:

$$U_{M2} + U_x = I_K . R_L \quad (Gl.8)$$

Addition von (Gl.7) und (Gl.8) und Teilung durch 2 ergibt

$$\frac{U_{M1} + U_{M2}}{2} = U_M = I_k . R_L \quad (Gl.9)$$

bzw.

$$R_L = \frac{1}{I_k} . U_M \quad (Gl.10)$$

Wenn $U_M$ hochohmig ($I_M \leqq 1nA$) gemessen wird, kann einerseits der Spannungsabfall an $n.R_F$ vernachlässigt werden, anderseits können bei entsprechender Wahl von $I_K$ Leckwiderstände $R_L$ von 0 bis > $10M\Omega$ sehr genau und mit hoher Auflösung gemessen werden.

Die Vorrichtung nach Fig.6 ist auch in Fällen anwendbar, bei dessen nichtlineare Bauelemente (z.B. Dioden) im Meßkreis vorhanden sind. Ein solcher Fall tritt bei einem sich mehrfach verzweigenden Rohrnetz in der Praxis häufig auf und ist in Fig.7 schematisch dargestellt. Das Rohrnetz 12, welches mit mehrfachen Verzweigungen an die Rohrleitung 1 angeschlossen ist, ist von zwei Fühlerleitungen 3 aus Kupfer begleitet, wobei jeder Abzweigung des Rohrnetzes 12 zwei Dioden 13 in den Fühlerleitungen 3 zugeordnet sind. Dies dient dazu, den Leckort mittels Impulsreflexionsverfahren ermitteln zu können, ohne daß an den Verzweigungen falsche Echos erzeugt werden. Die Meßvorrichtung 10 hat die Aufgabe, einen Feuchtigkeitsschluß, der einen Leckwiderstand $R_L$ bildet, zwischen den Fühlerleitungen 3 richtig zu messen, unabhängig davon, wieviele Diodenspannungsabfälle im Meßkreis vorhanden sind.

Die zugehörige Meßvorrichtung ist im Ersatzschaltbild in Fig.8 dargestellt und wird - wie die Schaltung nach Fig.6 - von einer Konstantstromquelle 11 mit einem einstellbaren und genau bekannten Konstantstrom $I_K$ angespeist. Es ist ersichtlich, daß die Spannungsabfälle an den insgesamt sechs Dioden eine direkte Messung, wie sie bei der Schaltung nach Fig.6 möglich ist, nicht zulassen. Durch eine zweifache Messung mit verändertem $I_K$ läßt sich $R_L$ dennoch genau bestimmen:

1. Messung:

$$U_{M1} = 6.U_D + I_{k1} . R_L \quad (Gl.11)$$

2. Messung:

$$U_{M2} = 6.U_D + I_{k2} . R_L \quad (Gl.12)$$

Die Subtraktion der (Gl.12) von (Gl.11) ergibt

$$U_{M1} - U_{M2} = (I_{k1} - I_{k2}) . R_L \quad (Gl.13)$$

bzw.

$$R_L = \frac{U_{M1} - U_{M2}}{I_{k1} - I_{k2}} \quad (Gl.14)$$

Die den gemessenen Werten für $R_L$ zugeordneten Werte für I können wie folgt gemessen werden:

Mit einer bekannten Meßvorrichtung (z.B. nach der DE-OS 2 337 983) ist eine Messung mit dem Prinzipschaltbild nach Fig.3 möglich. Das Ersatzschaltbild (Fig.9) zeigt, daß

$$U_1 = n . U_F + U_x$$

Bei diesem bekannten Meßverfahren wird $U_x$ vernachlässigt, so daß $I = n = \frac{U_1}{U_F}$.

Mit einer bekannten Vorrichtung nach der AT-PS 388 430 läßt sich die Messung von I wie folgt durchführen, wobei auf die Fig.3 und 5 Bezug genommen wird, und das elektrische Ersatzschaltbild dasselbe ist wie in Fig.9, lediglich mit dem Unterschied, daß die Speisequelle (Spannung $U_F$) umpolbar ist:

1. Messung: Die Spannung $U_1$ am Verstärkereingang ergibt sich mit:

$$U_1 = n . U_F + U_x \quad (Gl.15)$$

2. Messung: Nach Umpolung der Speisequelle $U_F$ und Invertierung von $U_1$ zu $U_{1'}$ ergibt sich für $U_{1'}$:

$$U_{1'} = n . U_f - U_x \quad (Gl.16)$$

Die Addition von Gl.15 und Gl.16 ergibt: $U_1 + U_{1'} = 2 . n . U_F$, woraus ersichtlich ist, daß $U_x$ eliminiert ist.

Eine Teilung durch 2 und eine Umformung ergibt für den Leckort

$$I = n = \frac{U_1 + U_{1'}}{U_F} \quad (Gl.17)$$

3. Messung: Die Gesamtspannung $U_F$ ist durch Anlegen der Speisequelle und Messung der Differenzspannung $U_1 - U_2$ leicht zu ermitteln:

$$U_F = U_1" - U_2" \quad (Gl.18)$$

Daraus ergibt sich für den Leckort I endgültig:

$$I = n = \frac{U_1 + U_{1'}}{U_1" - U_2"} \quad (Gl.19)$$

Die so gewonnenen Werte für $R_L$ und I liefern die Koordinatenpaare für die anschließende Ermittlung des wahren Fehlerortwertes $I_o$ unter Ausschaltung des Einflusses der zusätzlichen Ableitwiderstände (Fig.2). Dies kann händisch geschehen, es ist jedoch natürlich in der Praxis vorzuziehen, hiefür einen Rechner 14 zu verwenden, dem die gemessenen Wertepaare I, $R_L$ eingegeben werden und der danach nach einem vorbestimmten Programm den Wert $I_o$ berechnet. Ein solcher Rechner 14 kann bei allen beschriebenen Meßvorrichtungen Anwendung finden. Hiezu geeignete Rechenvorrichtungen können auch dazu herangezogen werden, als Zeitpunktgeber für die Zeitpunkte der aufeinanderfolgenden Messungen zu dienen, so daß die Meßzeitpunkte in gleichmäßigen Abständen aufeinanderfolgen und automatisch in ihren Meßergebnissen erfaßt werden.

Meßungenauigkeiten können dazu führen, daß mehr als zwei gemessene Punkte nicht exakt auf einer Geraden liegen. Eine Erhöhung der Genauigkeit trotz Meßunsicherheiten und vereinzelter Fehlmessungen läßt sich durch Mittelungsverfahren erzielen, und zwar wie folgt:

Ein geeignetes Verfahren besteht in der gewichteten bzw. statistischen Mittelung der berechneten $I_o$-Werte. Hiebei wird jeder in das Koordinatensystem mit den Achsen $R_L$, I eingetragene Punkt mit jedem durch eine Gerade verbunden (Fig.10), wobei im allgemeinen alle diese Geraden verschiedene Steigungen haben (in Fig.10 übertrieben dargestellt). Nach der Geradengleichung $y = k_x + d$ schneiden die Geraden bei d die Y-Achse. Dieser Schnittpunkt ergibt also einen Wert $I_o = d$, der sich in der Nähe des Werts des tatsächlichen Leckorts befindet. Die Gesamtheit der ermittelten $I_o$-Werte wird nun bewertet. Um jeden Wert $I_o$ wird ein Wertebereich auf der I-Achse errichtet, die Größe dieses Wertebereichs ist experimentell zu ermitteln. Dieser Wertebereich ist in Fig.10 für alle der Geraden mit einer Ausnahme mit L bezeichnet, alle diese Wertebereiche sind somit gleich groß. Es wird nun für jeden der Wertebereiche L bestimmt, wieviele der $I_o$-Werte in den jeweiligen Wertebereich fallen. Jene Gerade bzw. jener Schnittpunkt $I_o$ wird als gemittelter $I_o$-Wert berücksichtigt, in deren Wertebereich L die meisten anderen $I_o$-Werte fallen. Dadurch werden $I_o$-Werte mit großer Abweichung eliminiert (siehe z.B. die zum Punktepaar $R_{L3}$, $I_3$ und $R_{L4}$, $I_4$ zugehörige Gerade, deren Schnittpunkt mit der I-Achse unter die Abszisse fällt). Die innerhalb des L-Wertebereiches der ermittelten Geraden liegenden Werte für $I_o$ können noch arithmetisch gemittelt werden, was aber nur mehr eine sehr geringe Verbesserung bringt.

Ein anderes Verfahren (Fig.11) verwendet das Prinzip der linearen Regression. Dieses Verfahren dient auch als Beweis dafür, daß die Folge der gemessenen Leckwiderstände mit der Folge der dazugehörigen gemessenen Leckorte in einem linearen Zusammenhang steht. Bei diesem mathematischen Verfahren werden nach der Gauß'schen Methode der kleinsten Quadrate zwei Regressionsgerade berechnet, die miteinander einen Winkel einschließen und eine sogenannte Schere bilden. Je kleiner dieser Winkel ist, desto straffer ist der stochastische Zusammenhang. Wenn sich die Schere schließt, spricht man von einem streng linearen Zusammenhang.

Die Geradengleichung der 1.Regressionsgerade lautet

$$Y = a_x + b_x \cdot x$$

wobei

$$a_x = \bar{y} - b_x \cdot \bar{x}$$

und

$$b_x = \frac{\sum_{i=1}^{n} (x_i - \bar{x})(y_i - \bar{y})}{\sum_{i=1}^{n} (x_i - \bar{x})^2}$$

ist. $\bar{y}$ und $\bar{x}$ sind die arithmetischen Mittelwerte der x- bzw. y-Koordinaten, ist die Anzahl der ins Koordinatensystem eingetragenen Meßpunkte.

Die Geradengleichung der 2.Regressionsgerade lautet

$$X = a_y + b_y \cdot Y$$

wobei

$$a_y = \bar{x} - b_y \cdot \bar{y}$$

und

$$b_y = \frac{\sum_{i=1}^{n} (x_i - \bar{x})(y_i - \bar{y})}{\sum_{i=1}^{n} (y_i - \bar{y})^2}$$

ist. Die beiden Werte $a_x$ bzw. $\frac{a_y}{b_y}$ entsprechen zwei sehr ähnlichen Werten des gesuchten $I_o$. Der arithmetische Mittelwert der beiden wird als $I_o$ angesehen.

Ein drittes Verfahren besteht in der Berechnung der Ausgleichsgeraden (Fig.12). Auch dieses Verfahren arbeitet nach der Gauß'schen Methode der kleinsten Fehlerquadrate, wobei jene zwei Unbekannten und gesucht werden, die mit der Gleichung

$$y = \alpha + \beta x$$

die Ausgleichsgerade bilden.

Mit Hilfe der gemessenen Punkte x,y (entsprechend den Werten $R_L$, I) kann man diese beiden Unbekannten abschätzen. Die Berechnung lautet

$$\hat{\alpha} \frac{[pa]}{[p]} - \hat{\beta} \frac{[px]}{[p]}$$

und

$$\hat{\beta} \frac{[pax][p] - [pa][px]}{[px^2][p] - [px][px]}$$

wobei

[p]      Anzahl der Meßpunkte
[px]     Summe der x-Werte
[pa]     Summe der y-Werte

[px²]    Summe der Quadrate der x-Werte

[pax]    Summe des Produkts $x_i \cdot y_i$

sind.

Im vorliegenden Fall entspricht $\hat{\alpha} = l_o$ dem tatsächlichen Leckort.

Bei den Verfahren nach den Fig. 11 und 12 kann es zweckmäßig sein, eine Vielzahl von Wertepaaren $R_L$, I zu messen, um eine höhere Genauigkeit zu erzielen. Die Erfassung zahlreicher Meßpunkte ist mit automatischen Meßmethoden problemlos möglich.

**Patentansprüche**

1.  Verfahren zur Ortung des wahren Ortes I einer Leckstelle in einer ein feuchtes Medium führenden Rohrleitung (1) unter Verwendung zumindest einer entlang der Rohrleitung (1) verlegten, elektrisch leitenden, vorzugsweise von einem Draht gebildeten Fühlerleitung (3), an die eine elektrische Stromquelle (5) anschaltbar ist, wobei von der Fühlerleitung (3) eine erste elektrische Meßgröße für den Gesamtableitwiderstand RL zwischen der Fühlerleitung ( 3) und der Rohrleitung (1) und eine zweite Meßgröße für den Leckort I ermittelt werden, **dadurch gekennzeichnet**, daß man zu zumindest zwei verschiedenen Zeitpunkten die erste Meßgröße und die zweite Meßgröße mißt, dann die so gewonnenen Werte für RL1, RL2, ... I1, I2.... als Koordinaten von Punkten in ein kartesisches Koordinatsystem mit den Achsen für RL und I einträgt, sodann aus den so gewonnenen Punkten zumindest eine Gerade ermittelt und schließlich den Schnittpunkt lo dieser Geraden mit der Achse für I bestimmt, wobei bei mehreren Schnittpunkten eine Mittelung erfolgt.

2.  Verfahren nach Anspruch 1, **dadurch gekennzeichnet**, daß die verschiedenen Zeitpunkte in einem Intervall von wenigen Minuten liegen.

3.  Verfahren nach Anspruch 1, **dadurch gekennzeichnet**, daß man die verschiedenen Schnittpunkte lo nach der Formel

    $$lo = l2 - KRL2$$

    ermittelt, wobei

    $$K = \frac{l1 - l2}{RL1 - RL2}$$

4.  Verfahren nach einem der Ansprüche 1, 2 oder 3, **dadurch gekennzeichnet**, daß im Koordinatensystem jeder der mehr als zwei Punkte mit jedem durch eine Gerade verbunden wird, wobei jede dieser Geraden mit der Achse für I zum Schnitt gebracht wird, daß um jeden der so gewonnenen Schnittpunkte ein vorbestimmtes Intervall auf der Achse für I aufgetragen wird, worauf als lo jener Schnittpunkt bestimmt wird, in dessen Intervall die meisten Schnittpunkte fallen.

5.  Verfahren nach Anspruch 1 oder ,**dadurch gekennzeichnet**, daß im Koordinationsystem aus mehreren Punkten zwei Regressionsgerade nach der Gauß'schen Methode der kleinsten Quadrate gebildet werden, wobei als lo der arithmetische Mittelwert der Schnittpunkte dieser beiden Geraden mit der Achse für I ermittelt wird.

6.  Verfahren nach Anspruch 1 oder 2, **dadurch gekennzeichnet**, daß im Koordinationssystem aus mehreren Punkten eine Gauß'sche Ausgleichgerade nach der Methode der kleinsten Fehlerquadrate gebildet wird, wobei als lo der Schnittpunkt dieser Geraden mit der Achse für I ermittelt wird.

7.  Vorrichtung zur Durchführung des Verfahrens nach einem der Ansprüche 1 - 6 mit zumindest einer Meßeinrichtung für die Messung einer ersten Meßgröße für den Gesamtableitwiderstand RL und einer zweiten Meßgröße für den Leckort I, **dadurch gekennzeichnet**, daß ein mit der Meßeinrichtung verbundener Rechner (14) vorgesehen ist, der zu zumindest zwei verschiedenen Zeitpunkten die erste Meßgröße und die zweite Meßgröße ermittelt, dann die so gewonnen Werte RL1, RL2, .... I1, I2.... als Koordinaten von Punkten in ein kartesisches Koordinatensystem mit den Achsen für RL und I einträgt, sodann aus den so gewonnenen Punkten zumindest eine Gerade ermittelt und schließlich den Schnittpunkt lo dieser Geraden mit der Achse für I bestimmt, wobei bei mehreren Schnittpunkten eine Mittelung erfolgt, und den Schnittpunkt lo als Meßergebnis für den wahren Ort einer Leckstelle ausgibt.

8.  Vorrichtung nach Anspruch 7, **dadurch gekennzeichnet**, daß die Meßeinrichtung (10) einen Umpolschalter zur Umpolung eines über einen Teil der Fühlerleitung (3) geführten Stromes aufweist.

9. Vorrichtung nach Anspruch 7 oder 8, **dadurch gekennzeichnet**, daß die Fühlerleitung (3) an eine Konstantstromquelle (5) angeschlossen ist.

**Claims**

1. Method of detecting the true location i of a leakage in a conduit (1) carrying a damp medium, using at least one electrically conductive detecting line (3), laid along the conduit (1) and preferably formed by a wire, to which an electric power source (5) is connectable, the detecting line (3) determining a first electrical measured quantity for the total leakage resistance RL between the detecting line (3) and the conduit (1) and a second measured quantity for the leakage site 1, **characterized in that** the first measured quantity and the second measured quantity are measured at at least two different instants, then the values for RL1, RL2, ...l1, l2 ... thereby obtained are entered as coordinates of points into a cartesian coordinate system having the axes for RL and l, at least one straight line is then determined from the points thereby obtained and finally the point of intersection lo of said straight line with the axis for l is determined, with averaging being effected in the case of a plurality of points of intersection.

2. Method according to claim 1, **characterized in that** the different instants lie within an interval of a few minutes.

3. Method according to claim 1, **characterized in that** the various points of intersection lo are determined using the formula

$$lo = l2 - KRL2,$$

in which

$$K = \frac{l1 - l2}{RL1 - RL2.}$$

4. Method according to one of claims 1, 2 or 3, **characterized in that** in the coordinate system each of the more than two points is connected to each point by a straight line, each of said straight lines being brought to intersect with the axis for 1, that about each of the points of intersection thereby obtained a predetermined interval is plotted on the axis for 1, whereupon the point of intersection in whose interval the most points of intersection fall is determined as lo.

5. Method according to claim 1 or, **characterized in that** in the coordinate system two regression straight lines are formed from a plurality of points using the Gaussian method of least squares, the arithmetical mean value of the points of intersection of said two straight lines with the axis for l being determined as lo.

6. Method according to claim 1 or 2, **characterized in that** in the coordinate system a Gaussian fitting straight line is formed from a plurality of points using the method of least error squares, the point of intersection of said straight line with the axis for l being determined as lo.

7. Device for effecting the method according to one of claims 1 to 6, having at least one measuring device for measuring a first measured quantity for the total leakage resistance RL and a second measured quantity for the leakage site l, **characterized in that** a computer (14) connected to the measuring device is provided, which determines the first measured quantity and the second measured quantity at at least two different instants, then enters the values RL1, RL2, ...l1, l2 ... thereby obtained as coordinates of points into a cartesian coordinate system having the axes for RL and l, then determines at least one straight line from the points thereby obtained and finally determines the point of intersection lo of said straight line with the axis for l, with averaging being effected in the case of a plurality of points of intersection, and outputs the point of intersection lo as a measuring result for the true location of a leakage site.

8. Device according to claim 7, **characterized in that** the measuring device (10) has a polarity reversal switch for reversing the polarity of a current carried through a part of the detecting line (3).

9. Device according to claim 7 or 8, **characterized in that** the detecting line (3) is connected to a constant-current source (5).

**Revendications**

1. Procédé pour localiser l'endroit réel 1 d'une fuite dans une conduite tubulaire (1) conduisant un milieu humide en utilisant au moins un conducteur de captage (3) qui est posé le long de la conduite tubulaire (1), qui est conducteur de l'électricité, qui est de préférence constitué par un fil et auquel une source d'alimentation électrique (5) peut être raccordée, cependant que l'on détermine, à partir du conducteur de captage (3), au moins une première valeur électrique mesurée pour la résistance de fuite totale $R_L$ entre le conducteur de captage (3) et la conduite tubulaire (1) et une deuxième valeur mesurée pour l'endroit I de la fuite, caractérisé par le fait que l'on mesure la première valeur mesurée et la deuxième valeur mesurée à deux instants différents au moins, que l'on introduit les valeurs ainsi obtenues pour $R_{L1}$, $R_{L2}$ ... , $I_1$, $I_2$ ... comme coordonnées de points dans un système de coordonnées cartésiennes à axes $R_L$ et I, que l'on détermine alors au moins une droite à partir des points ainsi obtenus, et que l'on détermine enfin le point d'intersection Io de cette droite avec l'axe des I, un calcul de moyenne ayant lieu dans le cas de plusieurs points d'intersection.

2. Procédé selon la revendication 1, caractérisé par le fait que les divers instants sont situés dans un intervalle de quelques minutes.

3. Procédé selon la revendication 1, caractérisé par le fait que l'on détermine les divers points d'intersection selon la formule :

$$Io = I_2 - K.R_{L2}$$

où :

$$K = (I_1 - I_2) / (R_{L1} - R_{L2}).$$

4. Procédé selon l'une des revendications 1, 2 et 3, caractérisé par le fait que l'on relie entre eux par une droite dans le système de coordonnées chacun des points dont le nombre est supérieur à deux à chaque autre point, chacune de ces droites étant amenée à couper l'axe des I, et que l'on reporte sur l'axe des 1 un intervalle prédéterminé de part et d'autre de chacun des points d'intersection ainsi obtenus, la valeur de Io étant déterminée par le point d'intersection dans l'intervalle duquel tombent le plus grand nombre de points d'intersection.

5. Procédé selon la revendication 1 ou 2, caractérisé par le fait que l'on trace dans le système de coordonnées, à partir de plusieurs points, deux droites de régression obtenues selon la méthode des moindres carrés de Gauss, Io étant obtenu comme la moyenne arithmétique des points d'intersection de ces deux droites avec l'axe des I.

6. Procédé selon la revendication 1 ou 2, caractérisé par le fait que l'on trace dans le système de coordonnées, à partir de plusieurs points, une droite d'ajustement de Gauss selon la méthode des moindres carrés, le point d'intersection de cette droite avec l'axe des I étant retenu pour Io.

7. Dispositif pour la mise en oeuvre du procédé selon l'une des revendications 1 à 6, comprenant au moins un dispositif de mesure pour mesurer une première valeur mesurée pour la résistance de fuite totale $R_L$ et une deuxième valeur mesurée pour l'endroit I de la fuite, caractérisé par le fait qu'il est prévu un ordinateur (14) qui est relié au dispositif de mesure, qui détermine la première valeur mesurée et la deuxième valeur mesurée à deux instants différents au moins, qui introduit les valeurs ainsi obtenues $R_{L1}$, $R_{L2}$ ... , $I_1$, $I_2$ ... comme coordonnées de points dans un système de coordonnées cartésiennes à axes $R_L$ et I, qui détermine alors au moins une droite à partir des points ainsi obtenus, qui détermine enfin le point d'intersection Io de cette droite avec l'axe des I, un calcul de moyenne ayant lieu dans le cas de plusieurs points d'intersection, et qui fournit le point d'intersection Io comme résultat des mesures pour l'endroit réel d'une fuite.

8. Dispositif selon la revendication 7, caractérisé par le fait que le dispositif de mesure (10) comporte un inverseur de pôles pour intervertir la polarité d'un courant qui est amené à passer à travers une partie du conducteur de captage (3).

9. Dispositif selon la revendication 7 ou 8, caractérisé par le fait que le conducteur de captage (3) est raccordé à une source de courant constant (5).

FIG. 1

FIG. 2

FIG. 3

FIG. 4

FIG. 5

FIG. 6

FIG. 7

FIG. 8

FIG. 9

FIG. 10

FIG. 11                    FIG. 12